# EUROPÄISCHE PATENTSCHRIFT

(11) **EP 1 758 688 B1**
(45) Veröffentlichungstag und Bekanntmachung des Hinweises auf die Patenterteilung: **20.08.2008**
(21) Anmeldenummer: 05761587.4
(22) Anmeldetag: 27.05.2005
(51) Int. Cl.: B07C 3/00

(54) **VERFAHREN ZUR AUTOMATISCHEN ERMITTLUNG OPERATIVER LEISTUNGSDATEN VON LESESYSTEMEN**
METHOD FOR AUTOMATIC DETECTION OF OPERATIONAL PERFORMANCE DATA OF READING SYSTEMS
PROCEDE POUR DETERMINER AUTOMATIQUEMENT DES DONNEES DE PUISSANCE OPERATIONNELLES

(30) Priorität: 24.06.2004 DE 102004030415
(43) Veröffentlichungstag der Anmeldung: 07.03.2007
(73) Patentinhaber: SIEMENS AKTIENGESELLSCHAFT, 80333 München (DE)
(72) Erfinder: HAUTSCH, Werner, 78315 Radolfzell (DE)
(74) Vertreter: Fischer, Michael
(86) Internationale Anmeldenummer: PCT/EP2005/005711
(87) Internationale Veröffentlichungsnummer: WO 2006/000284

(56) Entgegenhaltungen:
- WO-A-02/082235
- WO-A-20/04022253

## Beschreibung

Die meisten der heute eingesetzten Anlagen zur automatischen Sortierung von Sendungen enthalten Lesesysteme, mit deren Hilfe die Aufschriften, wie z.B. Adressen der Sendungen automatisch gelesen und daraus die zur Sortierung notwendige Verteilinformation abgeleitet werden kann. Aufschriften/Adressen, die vom Lesesystem nicht mit der erforderlichen Sicherheit erkannt werden können, werden anschließend in einem Videokodiersystem weiterbearbeitet. Hierbei werden die elektronischen Bilder der Sendungen an Bildschirmarbeitsplätzen angezeigt. Die Kodierkräfte dieser Arbeitsplätze haben die Aufgabe, die für die Verteilung der Sendungen notwendige Information manuell zu ermitteln. Dabei handelt es sich nicht um ein Abschreiben der Adresse. Ein solches Vorgehen ist viel zu aufwendig und würde zu einer völlig unbefriedigenden Kostensituation führen. Es werden vielmehr unter genauer Beachtung der jeweiligen Adress-Strukturen bestimmte Kodierregeln aufgestellt, nach denen nur bestimmte Teile der Adresse eingegeben werden müssen. Dieser Informationsextrakt ist so zu definieren, dass daraus die notwendige Verteilinformation in den meisten Fällen in eindeutiger Weise gewonnen werden kann und nur in wenigen Fällen weitere Entscheidungen der Kodierkraft notwendig sind.

### Beispiel: Die Adresse

Siemens Dematic :
Bücklestraße 1-5
78467 Konstanz
wird beim Videokodieren abgekürzt zu:
78467 Büc1.

Dieses Verfahren ist z.B. aus DE-A-102 12 085 oder WO-A-2004/022253 als Extraktionskodierverfahren bekannt.

Bei Anwendung dieser Technologie ist es von größter Bedeutung, verlässliche Leistungsdaten des Lese- und Videokodiersystems im operativen Betrieb für Überwachung und Planung bereitzustellen.
Bei der Ermittlung dieser Leistungsdaten ist es wesentlich, repräsentative, in längeren Zeiträumen gültige Werte zu ermitteln und gleichzeitig Material für gezielte weitergehende Analysen bereitzustellen.

Diese Forderungen konnten in der Vergangenheit nur sehr lückenhaft erfüllt werden:
Während es zwar leicht ist, den Anteil der automatisch gelesenen Sendungen und der vom Videokodiersystem bearbeiteten Sendungen zu messen, so sind jedoch diese Zahlen wenig aussagekräftig, solange kein Bezug zur Qualität der Sendung oder der Anordnung und Lesbarkeit des Schriftbildes hergestellt werden kann. Da die Leserate für handgeschriebene Aufschriften wesentlich niedriger als die Leserate für Maschinenschrift ist, führt der mit Wochentagen oder Jahreszeiten (z.B. Weihnachten) wechselnde Anteil von handgeschriebenen Adressen zu derartigen Schwankungen der Leseraten, die andere wichtige Einflüsse völlig überdecken.
Noch schwieriger ist es, die Fehlerrate der Systeme im operativen Betrieb durchgehend zu bestimmen:
Üblicherweise werden Fehlverteilungen frühestens im Zustellamt oder zumeist erst durch den Zusteller festgestellt.
Zu diesem Zeitpunkt ist es mit vertretbarem Aufwand nicht mehr möglich, Rückschlüsse auf die verursachenden Systeme zu ziehen und repräsentative, stichhaltige Werte der Fehlerraten zu ermitteln.
Erfahrungsgemäß führt dies immer wieder zu Missverständnissen zwischen den Herstellern dieser Systeme und ihren Nutzern:
Aus der Tatsache, dass bei einem Zusteller ein erhöhter Anteil von Fehlverteilungen auftritt, kann nicht notwendig auf eine allgemeine Überschreitung der vertraglich zugesicherten Fehlerraten geschlossen werden.
Meinungsverschiedenheiten dieser Art konnten in der Vergangenheit nur durch nachträgliche, meist sehr aufwendige Messungen gelöst werden: In ausgewählten Ämtern wurden über einen bestimmten Zeitraum Stichproben aus allen verarbeiteten Sendungen manuell ausgewählt. Von diesen Sendungen wurden elektronische Abbilder erzeugt, in einer Teststichprobe gesammelt und durch ein dem operationellen Lesesystem entsprechendes System nochmals verarbeitet.
Durch visuellen Vergleich der einzelnen Leseergebnisse mit den tatsächlichen Adressen unter Heranziehung der im Adresswörterbuch enthaltenen Daten wurden daraus die Lese- und Fehlerraten des Lesesystems ermittelt.
Es liegt auf der Hand, dass dieses Verfahren natürlich nur Aussagen über die ausgewählten Ämter und den ausgewählten Messzeitraum liefert und damit keine Aussagen über die vorher festgestellten Fehler zulässt, sofern nicht zufällig diese Fehler erneut in der Teststichprobe auftreten.
Aussagen über Fehleingaben der Kodierkräfte (Tipp- und Flüchtigkeitsfehler) sind bei diesem Vorgehen grundsätzlich nicht möglich.

Der Erfindung liegt die Aufgabe zugrunde, ein Verfahren zur automatischen Ermittlung operativer Leistungsdaten von Lese-und/oder Videokodiersystemen zum Lesen von Sendungsaufschriften zu schaffen, mit dem die Leistungsdaten, wie Lese- und Fehlerraten, und Fehlerursachen für jeden Zeitabschnitt des operativen Betriebes ermittelbar sind.

Erfindungsgemäß wird die Aufgabe durch die Merkmale des Anspruches 1 gelöst.
Dabei werden folgende Schritte durchgeführt:
- Abspeichern der Abbilder der die zu lesenden Sendungsaufschriften aufweisenden Sendungsoberflächen jeder n-ten Sendung zusammen mit zugehörigen Leseergebnissen und - teilergebnissen des jeweiligen OCR-Lesers und vorhandenen Kodierergebnissen aus dem operativen Verarbeitungsprozess, wenn die Kodiertiefe der Lesetiefe entspricht, unter der jeweiligen Sendungskennung in einem Leistungsdatenspeicher,
- Videokodieren der betreffenden Sendungsaufschriften der im Leistungsdatenspeicher unter der betreffenden Sendungskennung gespeicherten Abbilder durch eine zweiten Kodierkraft mit einer der Lesetiefe entsprechenden Kodiertiefe und Abspeichern des Kodierergebnisses im Leistungsdatenspeichers unter der jeweiligen Sendungskennung,
- automatischer Vergleich der Leseergebnisse des OCR-Lesers und der dazugehörenden Videokodierergebnisse des vorigen Schrittes für jede im Leistungsdatenspeicher enthaltene Sendungskennung, bei Nichtübereinstimmung Durchführung von Videokodierungen durch eine oder mehrere weitere Kodierkräfte und zusätzliche automatische Vergleiche mit diesen Kodierergebnissen zur Herbeiführung einer Mehrheitsentscheidung,
- Abspeichern aller Videokodierergebnisse und des Bewertungsergebnisses unter der jeweiligen Sendungskennung und statistische Auswertung zur Ermittlung von Fehler- oder Leseraten bezogen auf das Gesamtsystem und/oder Teilen davon und/oder operative Kodierkräfte und/oder zur Ermittlung der Häufigkeit von mehrdeutigen, nicht interpretierbaren oder unlesbaren Sendungsaufschriften.
Auf diese Weise können verlässliche Ausgangswerte für die wirtschaftliche Bewertung und Planung solcher Systeme bereit gestellt werden.

Vorteilhafte Ausgestaltungen der Erfindung sind in den Unteransprüchen dargelegt.
So kann die statistische Auswertung der Lese- und Fehlerraten auch bezogen auf Sendungsarten oder Aufschriftkategorien erfolgen.

Anschließend wird die Erfindung in einem Ausführungsbeispiel anhand der Zeichnung erläutert.

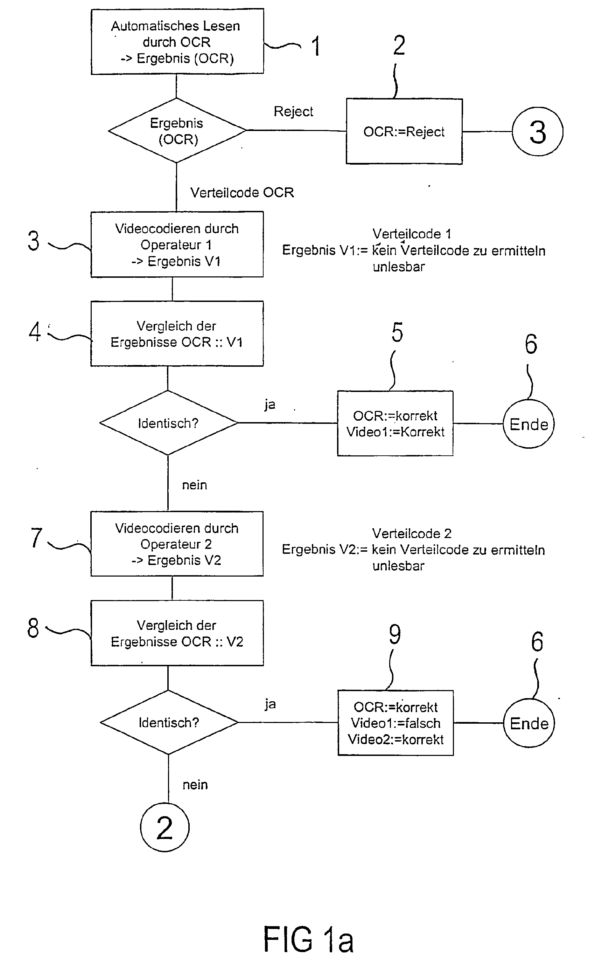

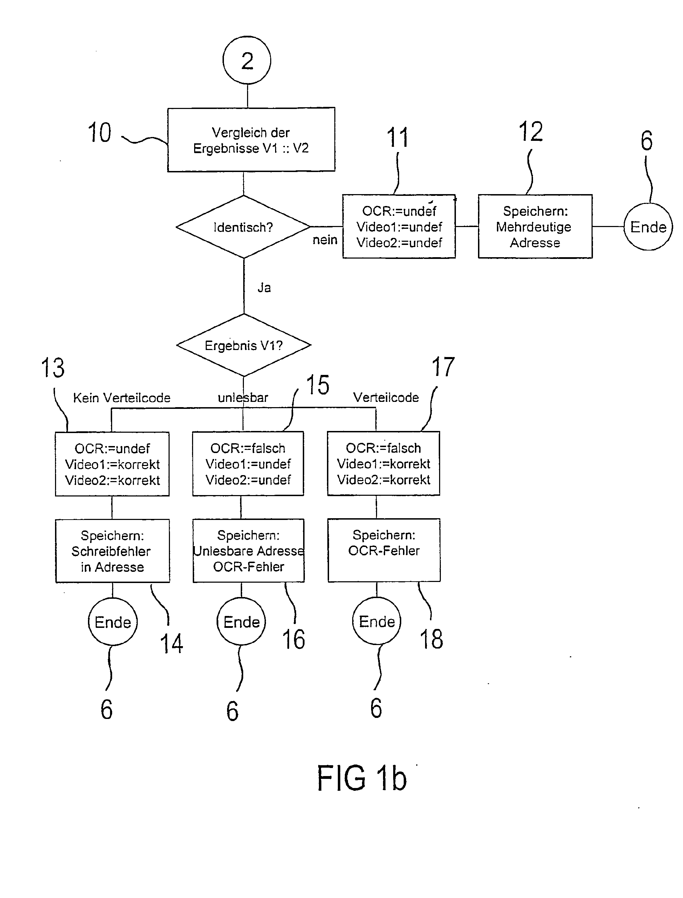

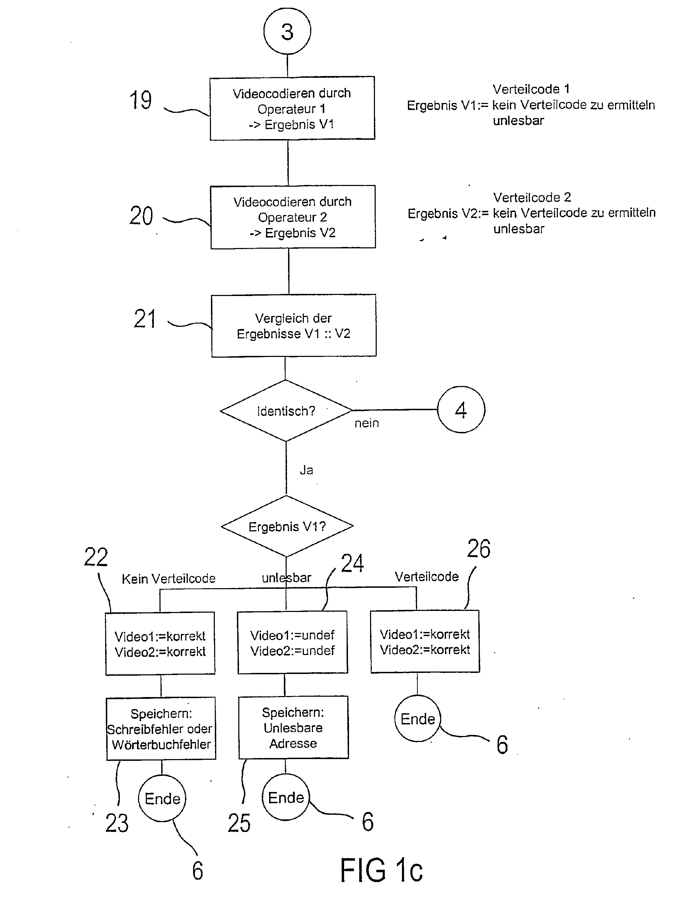

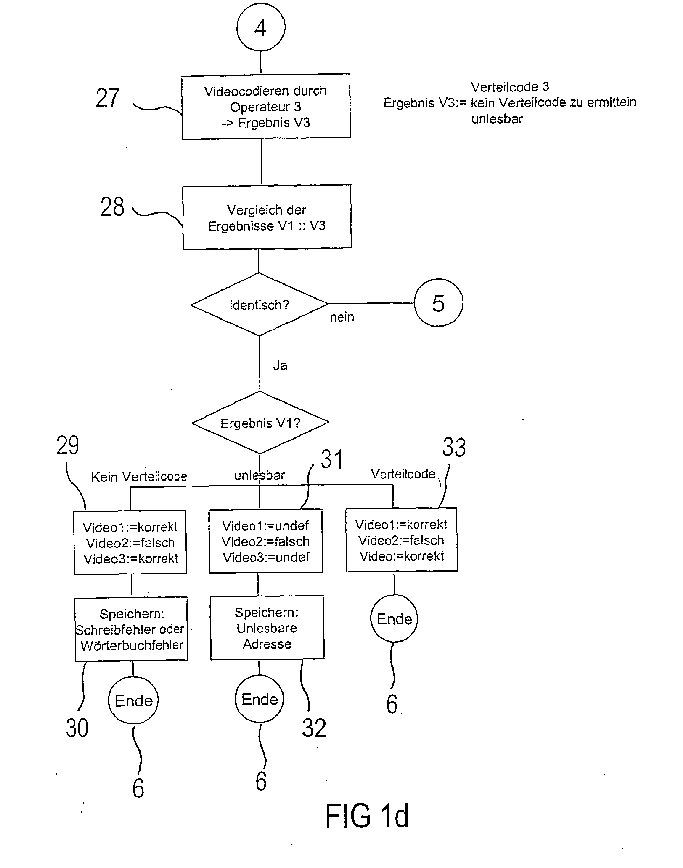

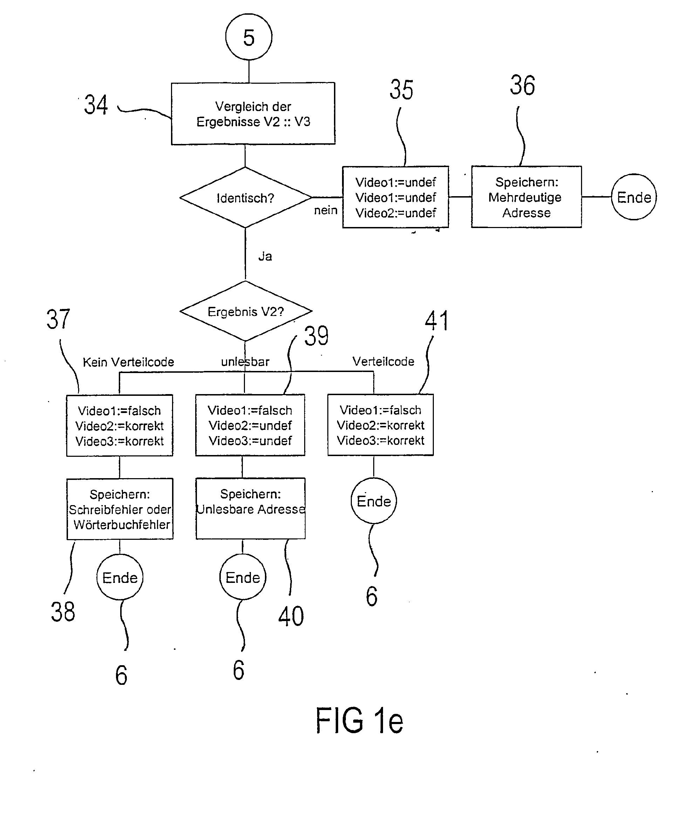

Dabei zeigen
FIG 1a-e ein Flussdiagramm des Verfahrensablaufes

Für die statistische Auswertung werden zusätzlich zu den Bildern der Sendungen aufgezeichnet:
- Herkunft der Bilder (Sortiermaschine),
- Verarbeitendes Lesesystem und beteiligte Videokodierkräfte,
- alle Ergebnisse der Lesesysteme,
- die vom OCR-Leser getroffene Unterscheidung zwischen Hand-und Maschinenschrift.
Diese Informationen dienen dazu, die gewonnenen Qualitätsaussagen auf bestimmte Sortiermaschinen, Lesesysteme und Videokodierkräfte, sowie selektiv auf Hand- oder Maschinenschrift zu beziehen.

Die Richtigkeit der von den OCR-Lesern gewonnenen Leseergebnisse wird durch Korrelation mit den Videokodierergebnissen überprüft.

Die in einem Leistungsdatenspeicher gespeicherten, vom OCR-Leser erfolgreich gelesenen Sendungen werden zur Überprüfung des Resultats dem Videokodiersystem übergeben. Die aus der Videokodierung sich ergebende Verteilinformation wird mit dem Ergebnis des OCR-Lesers verglichen.

Bei Gleichheit wird von der Richtigkeit beider Resultate ausgegangen.

Bei unterschiedlichen Resultaten wird eine zweite Kodierkraft herangezogen, um zu einer Mehrheitsentscheidung zu kommen, welches der beiden Resultate korrekt ist:
Wenn die Videokodiereingabe beider Kodierkräfte übereinstimmt, jedoch zu einer vom Leseergebnis des OCR-Lesers abweichenden Verteilinformation führt, dann wird das Leseergebnis des OCR-Lesers als falsch betrachtet und als solches in der Statistik gezählt.

Wenn beide Kodierkräfte die Sendungsaufschrift als unlesbar betrachten und keine Videokodiereingabe machen, so wird das Leseergebnis ebenfalls als falsch betrachtet. Es ist dann anzunehmen, dass die Sendung keine lesbare Aufschrift trägt, der OCR-Leser jedoch eine andere Information auf der Sendung fehlinterpretiert hat.

Wenn das Ergebnis der zweiten Kodierkraft mit dem Leseergebnis übereinstimmt, so deutet dies auf einen Kodierfehler der ersten Kodierkraft aus dem operativen Betrieb hin und ist als solcher in der Statistik zu zählen.

Wenn die zweite Kodierkraft zu einem von der ersten Kodierkraft und vom OCR-Leser abweichenden Ergebnis kommt, so handelt es sich mit hoher Wahrscheinlichkeit um eine mehrdeutige Adresse. Eine Aussage über die Korrektheit des Leseergebnisses ist dann nicht möglich. Die Sendung sollte einer weiteren Prüfung unterzogen werden.

Beim Vergleich der Ergebnisse ist es von großer Bedeutung, dass die Verteiltiefen des OCR-Lesers und des Videokodiersystems gleich sind:
ein Videokodiersystem, das nur die Eingabe von Postleitzahlen erlaubt, ist nicht in der Lage, fehlerhafte, nicht mit der Adresse übereinstimmende Postleitzahlen zu erkennen. Würde bei der obigen Beispiel-Adresse die fehlerhafte Postleitzahl 78462 anstatt 78467 verwendet, so würde der OCR-Leser durchaus in der Lage sein, diesen Fehler zu erkennen und die richtige Postleitzahl als Ergebnis zu liefern. Hingegen würde das nur die Postleitzahl kodierende Videocodiersystem in beiden Fällen das Ergebnis 78462 liefern und somit einen Fehler des betreffenden OCR-Lesers vortäuschen.

Es kann auch der Fall auftreten, dass aus der Eingabe beider Kodierkräfte keine Verteilinformation ermittelbar ist. Dies deutet auf einen Schreibfehler in der Adresse hin, der vom OCR-Leser automatisch korrigiert werden konnte.

### Beispiel:

Wenn die obige Beispiel-Adresse einen Schreibfehler des Absenders enthält:
Siemens Dematic AG
Böcklestr.1-5
78467 Konstanz
dann wird die Kodierkraft eingeben: 78467 böc1
Dies wird jedoch zu keinem Verteilergebnis führen, weil es keine Straße mit diesen Anfangsbuchstaben in Konstanz gibt. Das Lesesystem hingegen ist in der Lage, solche geringfügigen Schreibfehler zu kompensieren. Eine Aussage über die Richtigkeit des Leseergebnisses ist jedoch auf diese Weise nicht zu erhalten.

Die Fehler-Statistik kann dabei auf einzelne OCR-Leser bezogen werden und damit auf spezielle Probleme dieses Systems hinweisen.
Die Bilder der fehlerhaft gelesenen Sendungen können zur späteren Analyse gespeichert werden.

Die Richtigkeit der Videokodier-Eingaben im operativen Betrieb wird analog durch Vergleich der sich daraus ergebenden Verteilinformation mit den Ergebnissen anderer, unabhängiger Kodierkräfte oder durch Korrelation mit den Ergebnissen des OCR-Lesers überprüft.

Eine in dem Leistungsdatenspeicher enthaltenes Abbild mit einer Adresse, die vom OCR-Leser nicht eindeutig oder vollständig gelesen werden konnte und deshalb im operativen Betrieb von einer Kodierkraft videokodiert wurde, wird einer zweiten unabhängigen Kodierkraft zum Videokodieren übergeben.

Bei Gleichheit der Ergebnisse wird von der Korrektheit beider Videokodier-Eingaben ausgegangen.

Bei unterschiedlichen Resultaten wird eine dritte Kodierkraft herangezogen, um zu einer Mehrheitsentscheidung zu kommen. Das von der Mehrheit abweichende Resultat wird als Eingabefehler gewertet.

Wenn alle drei Kodierkräfte zu unterschiedlichen Ergebnissen kommen, so handelt es sich mit hoher Wahrscheinlichkeit um eine nicht eindeutig interpretierbare Adresse. Eine Aussage über die Korrektheit der Videokodierung ist dann nicht möglich.

Wenn die Eingabe beider Kodierkräfte identisch ist, aber daraus keine Verteilinformation ableitbar ist, so deutet dies auf einen Schreibfehler in der Adresse oder einen fehlenden Eintrag im Adresswörterbuch hin. Die Eingaben werden als korrekt betrachtet. Die Adresse wird als nicht interpretierbar betrachtet.

Wenn beide Kodierkräfte keine Videokodiereingaben machen können und die Adresse zurückweisen, so handelt es sich um eine unlesbare oder unleserliche Adresse. Die Zurückweisung wird als korrekte Eingabe gewertet.

Wenn der OCR-Leser in der Lage war, die Sendungsaufschrift zu lesen, so kann die Beauftragung der dritten Kodierkraft entfallen. Die Richtigkeit der Videokodiereingaben wird dann, wie im obigen Abschnitt beschrieben, in der Korrelation mit dem OCR-Leseergebnis ermittelt.

Eine Fehler-Statistik kann dabei wahlweise auf alle oder auf einzelne Kodierkräfte bezogen werden.
Die Abbilder der fehlerhaft kodierten Sendungsaufschriften können zur späteren Analyse gespeichert werden.

Wie oben beschrieben wurde, ergeben sich aus der Korrelation der OCR-Lese- und Videokodierergebnisse auch Hinweise auf mehrdeutige und nicht interpretierbare Sendungsaufschriften/Adressen.

Eine Adresse wird als mehrdeutig betrachtet, wenn keine Mehrheitsentscheidung zwischen den Ergebnissen des OCR-Lesers und zwei bzw. drei Kodierkräften möglich ist.

Eine Adresse wird als nicht interpretierbar betrachtet, wenn weder der OCR-Leser noch die Eingaben der Kodierkräfte zu einem Verteilergebnis führen.

Grund dafür sind entweder Mängel der Adresse oder des verwendeten Adresswörterbuchs. Diese Entscheidung kann nicht automatisch getroffen werden.

Die auf diese Weise aufgezeigten Sendungsadressen können der gezielten Behebung der Mängel des Adresswörterbuchs dienen.

Adressen, die sowohl vom OCR-Leser als auch von den Kodierkräften zurückgewiesen wurden, werden als unlesbar betrachtet. Da die weitere Verarbeitung solcher Sendungen einen sehr hohen Arbeitsaufwand erfordert, ist ihre Erfassung und die Messung ihres Anteils von großer Bedeutung.

Das Verfahren ist für sämtliche Sendungsaufschriften, wie Empfängeradressen, Absenderadressen, Vorausverfügungen, Inhalte von Formularen einsetzbar.

Die gegenüber dem operativen Betrieb benötigten zusätzlichen Videokodierschritte werden in den normalen operationellen Ablauf eingestreut, sodass für die Kodierkräfte kein Unterschied zwischen normalen und Testsendungen besteht.
Die Mehrbelastung des Videokodiersystems durch die zusätzlichen, der Überprüfung dienenden Schritte ist sehr gering, da die Zahl der Stichproben niedrig behalten werden kann.
Wird z.B. jede 500.Sendung überprüft, so ergibt sich bei einer Leserate von 80% und einer Fehlerrate von 1% ein Mehraufwand von 1% in der Videokodierung.
Dieser Mehraufwand führt jedoch nicht zu einer Erhöhung der Arbeitsplätze und der Anzahl der notwendigen Kodierkräfte, da er in den Zeiten verminderten Maschinendurchsatzes als Lücken- und Pausenfüller erbracht werden kann.

Dadurch ist es möglich, das Mess-System zur Ermittlung der Leistungsdaten während des gesamten operativen Betriebs im Hintergrund mitlaufen zu lassen und damit den Verlauf der Performance über die gesamte Betriebszeit festzuhalten.

Die statistische Genauigkeit der ermittelten Leistungsdaten hängt von der Dauer der jeweiligen Messintervalle und vom Durchsatz ab: Im obigen Zahlenbeispiel wird durch Überprüfung jeder 500.Sendung bei einem mittleren Maschinendurchsatz von 30.000 Sendungen/h in 50h eine Teststichprobe von 3000 Sendungen gesammelt. Gemäß der Berechnung der statistischen Standard-Abweichung Sigma erlaubt diese Stichprobe die Bestimmung der Fehlerrate von 1% mit einer Abweichung von ca. 0.2% nach beiden Seiten. Durch Erhöhung der Stichproben- - Frequenz, durch Integration über größere Zeiträume und mehrere Maschinen kann diese Genauigkeit beliebig gesteigert werden.

Im Folgenden wird das Verfahren anhand des dargestellten Flussbildes erläutert.

Die mit Sendungskennungen verbundenen Bilder der Teststichprobe werden zunächst vom OCR-Leser bearbeitet 1. Ist der OCR-Leser dabei erfolgreich, so liefert er als Ergebnis den der Adresse entsprechenden Verteilkode.
Die Korrektheit dieses Verteilkodes ist zu überprüfen. Zu diesem Zweck wird das Bild der Sendung an eine Kodierkraft übergeben 3. Hatte der OCR-Leser kein eindeutiges oder vollständiges Ergebnis geliefert, so ist diese Kodierkraft die Kodierkraft für den normalen operativen Betrieb. Die von ihr eingegebene Kodiersequenz wird vom System ausgewertet. Bei der Betrachtung des Ergebnisses sind drei Fälle zu unterscheiden: Im Normalfall wird das Ergebnis ebenfalls ein Verteilkode sein. Es gibt jedoch auch Fälle, in denen aus der Kodiersequenz kein Verteilkode zu ermitteln ist, weil die Kodiersequenz oder die Adresse selbst Fehler enthält. Wenn schließlich die Kodierkraft auf dem Bild der Sendung überhaupt keine sinnvolle Adresse erkennen kann, so muss sie die Adresse als unlesbar zurückweisen.

Die Ergebnisse dieser ersten Videokodierung werden nun mit dem OCR-Ergebnis verglichen 4. Wenn sie übereinstimmen, was beim operativen Videokodieren nicht der Fall ist, werden beide als korrekt betrachtet 5 und entsprechend in der Statistik gezählt/Ende 6.

Stimmen sie nicht überein, so wird das Bild der Sendung zur Videokodierung an eine weitere Kodierkraft übergeben 7. Ihr Ergebnis wird nun wiederum mit dem OCR-Ergebnis verglichen 8. Ist es identisch, so sind das OCR-Ergebnis und die zweite Videokodierung korrekt, die erste Videokodierung hingegen falsch 9.

Ist wiederum keine Übereinstimmung festzustellen, so werden die beiden Videokodierergebnisse miteinander verglichen 10. Sind sie identisch, so richtet sich die weitere Entscheidung nach der Art des Ergebnisses: Handelt es sich um einen Verteilkode, so werden die beiden Kodierergebnisse als richtig, das OCR-Ergebnis als falsch betrachtet 17. Zur näheren Analyse kann das zum OCR-Fehler führende Bild gespeichert werden 18.

Führen beide Kodierergebnisse nicht zu einem Verteilkode, so handelt es sich wahrscheinlich um einen Schreibfehler in der Adresse, der vom OCR-Leser korrigiert werden konnte. Ob dies in der richtigen Weise geschehen ist, ist jedoch auf diese Weise nicht feststellbar. Das OCR-Ergebnis wird daher als nicht überprüfbar (undefiniert) betrachtet. Die Kodierkräfte haben sich jedoch korrekt im Rahmen der vorgeschriebenen Kodierregeln verhalten und werden entsprechend bewertet 13. Das Bild der Sendung kann als Beispiel von Schreibfehlern gespeichert werden 14. Betrachten beide Kodierkräfte die Sendungsadresse als unlesbar, so ist das OCR-Ergebnis wahrscheinlich falsch. Möglicherweise hat der OCR-Leser anstelle der unleserlichen Empfängeradresse die Absenderadresse gelesen. Über die Korrektheit der Videokodierung ist jedoch keine Aussage möglich 15. Das Bild der Sendung kann als Beispiel von unlesbaren Sendungen gespeichert werden 16.

War der OCR-Leser nicht in der Lage, einen Verteilkode zu ermitteln, so wird die Sendung als OCR-Rückweisung gewertet 2. Das Sendungsbild wird dann von zwei unabhängigen Kodierkräften bearbeitet 19,20 und deren Ergebnisse verglichen 21. Sind sie identisch, so erfolgt die weitere Entscheidung analog zu dem oben geschilderten Verfahren. Wurde ein Verteilkode von der ersten Kodierkraft aus dem operativen Betrieb ermittelt, so werden beide Videokodierergebnisse als korrekt betrachtet 26.
Betrachten beide Kodierkräfte die Sendungsadresse als unlesbar, so ist über die Korrektheit der Videokodierung jedoch keine Aussage möglich 24. Das Bild der Sendung kann als Bei spiel von unlesbaren Sendungsadressen gespeichert werden 25. Konnte kein gültiger Verteilkode ermittelt werden, werden die Videokodierungen als korrekt angesehen 22 und das Bild wird als Beispiel für Schreib- oder Wörterbuchfehler abgespeichert 23.

Sind die Videokodierergebnisse der beiden Kodierkräfte nicht identisch, wird eine dritte Kodierkraft zur Entscheidung herangezogen 27. Stimmt ihr Ergebnis mit dem Ergebnis der ersten Kodierkraft überein, so ist die zweite Videokodierung wahrscheinlich falsch. Wurde ein Verteilkode ermittelt, so sind die erste und die dritte Videokodierung korrekt 33, wurde kein gültiger Verteilkode ermittelt, werden beide Videokodierungen als korrekt betrachtet 29 und das Bild kann unter der Rubrik Schreib- oder Wörterbuchfehler 30 abgespeichert werden. Bei dem Videokodierergebnis "unlesbar" kann das betreffende Bild unter unlesbare Adresse abgespeichert werden 31,32. Ist das Videokodierergebnis der ersten und der dritten Kodierkraft nicht identisch, so wird das Videokodierergebnis der zweiten und dritten Kodierkraft verglichen 34. Kann keine Übereinstimmung festgestellt werden, so werden die Ergebnisse als undefiniert angesehen 35 und das Bild kann unter "mehrdeutige Adresse" gespeichert werden 36. Stimmen die Videokodierergebnisse überein, so ist die Kodierung der ersten Kodierkraft falsch. Die übrige Entscheidung erfolgt wiederum in Analogie zu dem bereits geschildertem Verfahren 37 bis 41.

Ist auch zwischen drei Kodierkräften keine Übereinstimmung herzustellen, so ist die Sendung offensichtlich mehrdeutig.

Es ist zu berücksichtigen, dass nach dem beschriebenen, stark vereinfachten Entscheidungsverfahren mehrdeutige Sendungen auch Fehler vortäuschen können: Entscheiden sich z.B. bei einer Adresse mit zwei verschiedenen Interpretationsmöglichkeiten zwei Kodierkräfte für die eine und eine Kodierkraft für die andere Interpretation, so wird die eine Videokodierung wegen des Mehrheitsprinzips als falsch betrachtet. Treten mehrdeutige Adressen gehäuft auf, so erlaubt das Verfahren eine Erweiterung der Entscheidungsgrundlagen durch Heranziehen weiterer Kodierkräfte und durch Erweiterung des Mehrheitsprinzips: ein Ergebnis wird dann nur als falsch betrachtet, wenn alle anderen Ergebnisse (Anzahl >n=2) einstimmig dem betrachteten Ergebnis widersprechen.

## Patentansprüche

1. Verfahren zur automatischen Ermittlung operativer Leistungsdaten von Lesesystemen, bestehend aus OCR-Lesern und Videokodiersystemen, zum Lesen von Sendungsaufschriften, in denen die Abbilder der Sendungsoberflächen mit den zu lesenden Sendungsaufschriften jeder Sendung aufgenommen und dann die Sendungsaufschriften in dem OCR-Leser automatisch gelesen werden, wobei bei nicht vorhandenem oder nicht eindeutigem Leseergebnis die Sendungsaufschriften durch eine Kodierkraft videokodiert werden,
**gekennzeichnet durch** die Schritte:
- Abspeichern der Abbilder der die zu lesenden Sendungsaufschriften aufweisenden Sendungsoberflächen jeder n-ten Sendung zusammen mit zugehörigen Leseergebnissen und -teilergebnissen des jeweiligen OCR-Lesers und vorhandenen Videokodierergebnissen aus dem operativen Betrieb, wenn die Kodiertiefe der Lesetiefe entspricht, unter der jeweiligen Sendungskennung in einem Leistungsdatenspeicher,
- Videokodieren der betreffenden Sendungsaufschriften der im Leistungsdatenspeicher unter der betreffenden Sendungskennung gespeicherten Abbilder **durch** eine andere Kodierkraft mit einer der Lesetiefe entsprechenden Kodiertiefe und Abspeichern des Kodierergebnisses im Leistungsdatenspeicher unter der jeweiligen Sendungskennung,
- automatischer Vergleich der Leseergebnisse des OCR-Lesers und der dazugehörenden Videokodierergebnisse des vorigen Schrittes für jede im Leistungsdatenspeicher enthaltene Sendungskennung und wenn vorhanden der Videokodierergebnisse aus dem operativen Betrieb, bei Nichtübereinstimmung Durchführung von Videokodierungen durch eine oder mehrere weitere Kodierkräfte und zusätzliche automatische Vergleiche mit diesen Kodierergebnissen zur Herbeiführung einer Mehrheitsentscheidung,
- Abspeichern aller Videokodierergebnisse und des Bewertungsergebnisses unter der jeweiligen Sendungskennung und statistische Auswertung zur Ermittlung von Fehler-oder Leseraten bezogen auf das Gesamtsystem und/oder Teilen davon und/oder operative Kodierkräfte und/oder zur Ermittlung der Häufigkeit von mehrdeutigen, nicht interpretierbaren oder unlesbaren Sendungsaufschriften.

2. Verfahren nach Anspruch 1, **dadurch gekennzeichnet, dass** die statistische Auswertung der Lese- und Fehlerraten auch bezogen auf Sendungsarten oder Aufschriftkategorien erfolgt.

## Claims

1. Method for automatically determining operational performance data of reading systems, comprising OCR readers and video coding systems, for reading despatch inscriptions, in which the images of the despatch surfaces are recorded with the despatch inscriptions to be read for each despatch, and the despatch inscriptions are then automatically read in the OCR reader, with the despatch inscriptions being video-coded by means of a coding force if there is no reading result or the reading result is not clear,
**characterized by** the following steps:
- storage of the images of the despatch surfaces, which have the despatch inscriptions to be read, of every n-th despatch together with the associated reading results and reading partial results of the respective OCR reader and existing video coding results from operational use when the coding depth corresponds to the reading depth, under the respective despatch identification in a performance data memory,
- video coding of the relevant despatch inscriptions of the images stored under the relevant despatch identification in the performance data memory, by means of another coding force with a coding depth which corresponds to the reading depth, and storage of the coding result in the performance data memory under the respective despatch identification,
- automatic comparison of the reading results of the OCR reader and of the associated video coding results of the previous step for each despatch identification contained in the performance data memory and, if the video coding results from operational use are available, if there is no match, carrying out video coding processes by one or more further coding forces and additional automatic comparisons with these coding results in order to achieve a majority decision,
- storage of all the video coding results and of the assessment result under the respective despatch identification, and statistical evaluation in order to determine error rates or reading rates with respect to the overall system and/or parts of it and/or operational coding forces and/or in order to determine the frequency of ambiguous despatch inscriptions which cannot be interpreted or cannot be read.

2. Method according to Claim 1, **characterized in that** the statistical evaluation of the reading and error rates is also carried out with respect to despatch types or inscription categories.

## Revendications

1. Procédé de détermination automatique de données de performance opératoire de systèmes de lecture, constitués de lecteurs OCR et de systèmes de codage vidéo et destinés à la lecture d'adresses d'envoi, dans lesquels les images des surfaces d'envoi ayant les adresses à lire de chaque envoi sont enregistrées et dans lesquels les adresses d'envoi sont ensuite lues automatiquement dans le lecteur OCR, les adresses d'envoi en cas d'absence de résultat de lecture ou de non-unicité de résultat de lecture étant soumises à un codage vidéo par un poste de codage,
**caractérisé par** les étapes suivantes :
- mémorisation des images des surfaces d'envoi, comportant les adresses d'envoi à lire, de chaque n^{ième} envoi conjointement avec des résultats de lecture associés et des résultats de lecture partiels associés du lecteur OCR respectif ainsi qu'avec des résultats de codage vidéo existants issus du fonctionnement opératoire, lorsque la profondeur de codage correspond à la profondeur de lecture, dans une mémoire de données de performance sous l'identificateur d'envoi respectif,
- codage vidéo des adresses d'envoi concernées des images mémorisées dans la mémoire de données de performance sous l'identificateur d'envoi concerné par un autre poste de codage avec une profondeur de codage correspondant à la profondeur de lecture et mémorisation du résultat de codage dans la mémoire de données de performance sous l'identificateur d'envoi respectif,
- comparaison automatique des résultats de lecture du lecteur OCR et des résultats de codage vidéo associés de l'étape précédente pour chaque identificateur d'envoi contenu dans la mémoire de données de performance et, s'ils existent, des résultats de codage vidéo issus du fonctionnement opératoire et, en cas de non-coïncidence, mise en oeuvre de codages vidéo par un ou plusieurs autres postes de codage puis comparaisons automatiques supplémentaires avec ces résultats de codage pour prendre une décision à la majorité,
- mémorisation de tous les résultats de codage vidéo et du résultat d'évaluation sous l'identificateur d'envoi respectif et évaluation statistique pour la détermination de taux d'erreur ou de lecture par rapport au système global et/ou à des parties de celui-ci et/ou à des postes de codage opératoires et/ou pour la détermination de la fréquence d'adresses d'envoi ambiguës, non interprétables ou illisibles.

2. Procédé selon la revendication 1, **caractérisé par le fait que** l'évaluation statistique des taux de lecture et d'erreur s'effectue aussi par rapport aux types d'envois ou aux catégories d'adresses.
